# EUROPÄISCHE PATENTSCHRIFT

(11) **EP 1 877 674 B1**
(45) Veröffentlichungstag und Bekanntmachung des Hinweises auf die Patenterteilung: **14.04.2010**
(21) Anmeldenummer: 06704394.3
(22) Anmeldetag: 01.02.2006
(51) Int. Cl.: F16D 3/41, F16D 3/38

(54) **GELENKKREUZBÜCHSE MIT AXIALFÜHRUNG**
UNIVERSAL JOINT SOCKET WITH AXIAL GUIDING
MANCHON DE CROISILLON A GUIDAGE AXIAL

(30) Priorität: 28.04.2005 DE 102005019692
(43) Veröffentlichungstag der Anmeldung: 16.01.2008
(73) Patentinhaber: Schaeffler KG, 91074 Herzogenaurach (DE)
(72) Erfinder: ZERNICKEL, Alexander, 91074 Herzogenaurach (DE); KRUPPA, Martin, 91074 Herzogenaurach (DE)
(86) Internationale Anmeldenummer: PCT/EP2006/000839
(87) Internationale Veröffentlichungsnummer: WO 2006/114138

(56) Entgegenhaltungen:
- EP-A- 1 001 182
- BE-A1- 857 145
- DE-A1- 2 120 569
- DE-U- 1 827 229
- GB-A- 891 479
- PATENT ABSTRACTS OF JAPAN Bd. 1997, Nr. 11, 28. November 1997 (1997-11-28) & JP 09 196082 A (KOYO SEIKO CO LTD), 29. Juli 1997 (1997-07-29)

## Beschreibung

### Gebiet der Erfindung

Die vorliegende Erfindung betrifft ein Kreuzgelenk einer Gelenkwelle, das zwischen zwei unter einem Beugewinkel ausgerichteten Wellen angeordnet ist. Jede Welle ist dazu endseitig mit einer Gelenkgabel versehen. Ein Gelenkkreuz mit vier zueinander um 90° versetzten Zapfen verbindet die Gelenkgabeln, wobei jeweils zwei Zapfen einer Gelenkgabel zugeordnet sind. Die Zapfen sind jeweils über eine Gelenkkreuzbüchse in Verbindung mit einem Nadelkranz als Radiallager paarweise in den Gelenkgabeln eingesetzt.

### Hintergrund der Erfindung

Für heute eingesetzte Kreuzgelenke in Gelenkwellen wird eine möglichst spielfreie Übertragung zwischen den Gelenkkreuzbüchsen und dem Gelenkkreuz gefordert. Zum Ausgleich von einem fertigungsbedingten und einbaubedingten Spiel zwischen dem Zapfen des Gelenkkreuzes und der Gelenkkreuzbüchse in axialer Richtung ist es bekannt, die Gelenkkreuzbüchse unter Vorspannung gegen den Zapfen des Gelenkkreuzes einzupressen.

Die Funktion und die Qualität eines Kreuzgelenks, das auch als Kardan-Gelenk zu bezeichnen ist, wird insbesondere unter den Gesichtspunkten der Geräuschentwicklung, des Rundlaufs sowie des Schwingungsverhalten bewertet. Dazu ist das Fehlen eines axialen Spiels zwischen dem Zapfen des Gelenkkreuzes und der jeweiligen Gelenkkreuzbüchse entscheidend. Das axiale Spiel wird insbesondere von einer engen Tolerierung des Maßes zwischen den Böden von zwei gegenüberliegenden Gelenkkreuzbüchsen zu den Stirnflächen der Kreuzgelenk-Zapfen bestimmt.

Ein gattungsgemäßes Kreuzgelenk ist aus der DE 21 20 569 A bekannt. Die zwischen der Stirnfläche des Zapfens und dem Boden der Gelenkkreuzbüchse zentrisch angeordnete Wälzlagerkugel ist dabei teilweise in einer Ausnehmung des Zapfens sowie in einer weiteren Ausnehmung des Bodens der Gesenkkreuzbüchse geführt. Dieser Aufbau ermöglicht keine spielfreie Ausrichtung des Zapfens gegenüber der Gelenkkreuzbüchse.

Die weiterhin bekannte Druckschrift DE 21 22 575 A zeigt eine Gelenkkreuzbüchse, bei der bedingt durch die unter einer Anpresskraft zu montierende Gelenkkreuzbüchse mit einem Boden geringer Wandstärke, lediglich eine relativ flache Federkennlinie erzielbar ist. Diese Federkennlinie kombiniert mit der im Zentrum des Bodens zum Zapfen gerichteten, vorstehenden Anlauffläche erfüllt zunächst die Bedingung der spielfreien Anlage. Die Annpresskraft bewirkt nachteilig eine Durchwölbung der Anlauffläche, wodurch die Stirnfläche des Zapfens zunächst ausschließlich am äußersten Rand der Anlauffläche anläuft. Nach einer Einlaufphase, d.h. nach der die Durchwölbung abgerieben ist, stellt sich eine plane Anlauffläche zwischen der Stirnfläche des Zapfens und des Bodens ein. Damit verbunden ist eine verminderte Anpresskraft, die im ungünstigen Fall nicht zum Ausgleich des axialen Spiels zwischen dem Zapfen und der Gelenkkreuzbüchse ausreicht.

GB 891479 A zeigt Gelenkkreuzbüchsen für ein Kreuzgelenk, bei denen zwischen einem Boden der Gelenkkreuzbüchse und einer Stirnfläche des Zapfens ein zumindest zwei Wälzkörper umfassendes Axiallager angeordnet ist. Der Zapfen ist über das Axiallager an dem Boden der Gelenkkreuzbüchse abgestützt, axial geführt und zentriert. Die Wälzkörper des Axiallagers sind in Laufbahnen geführt. Die Laufbahnen sind in einer Stirnfläche des Zapfens und dem Boden der Gelenkkreuzbüchse eingebracht sind. Derartige Gelenkkreuzbüchsen sind geschaffen um radial elastisch auszugleichen und weisen deshalb radial wirkende Gleitlager mit hoch elastischem Verhalten auf. Diese Gelenkkreuzbüchsen sind mit Sicht auf die oben genannten Anforderungen an die spielfreie Ausrichtung des Zapfens gegenüber der Gelenkkreuzbüchse für den Einsatz in modernen Kreuzgelenken nicht geeignet.

### Aufgabe der Erfindung

Der vorliegenden Erfindung liegt die Aufgabe zugrunde, ein dauerhaft spielfreies Kreuzgelenk durch Maßnahmen zu schaffen, die kostengünstig realisierbar sind.

### Zusammenfassung der Erfindung

Die zuvor genannte Problemstellung wird erfindungsgemäß durch die Merkmale des Anspruchs 1 gelöst. Das Kreuzgelenk gemäß der Erfindung sieht vor, dass alle Zapfen des Gelenkkreuzes über ein als Schrägkugellager ausgebildetes Axiallager an dem Boden der Gelenkkreuzbüchse abgestützt und geführt sind. Das eingesetzte Schrägkugellager, das auch als Schrägschulterlager zu bezeichnen ist, bildet einen geschlossenen, kreisringförmigen Abstützkontakt zwischen dem Zapfen des Gelenkkreuzes und dem Boden der Gelenkkreuzbüchse ein. Vorteilhaft ist das als Schrägkugellager eingesetzte, zumindest zwei Wälzkörper umfassende Axiallager zwischen der Stirnseite des Zapfens und dem Boden der Gelenkkreuzbüchse so ausgeführt, dass dieses eine wirksame Zentrierung des Gelenkkreuzes gegenüber der Gelenkkreuzbüchse sicherstellt. Der Aufbau des erfindungsgemäßen Kreuzgelenks umfasst ein Axiallager, dessen Wälzkörper in Laufbahnen geführt sind, die in dem Zapfen und dem Boden der Gelenkkreuzbüchse eingebracht sind. Zur Erzielung eines verstärkten Zentrierungseffektes weisen die Laufbahnen für die Wälzkörper des Axiallagers zueinander radial versetzte Scheitellinien auf.

Durch den sich einstellenden definierten radialen Versatz der Laufbahnen in der Stirnseite des Zapfens und dem Boden der Gelenkkreuzbüchse ergibt sich ein Schrägkugellager bzw. Schrägschulterlager, mit dem der gewünschte Spielausgleich in axialer Richtung wirksam realisierbar ist.

Als Differenzmaß zwischen den abweichenden Durchmessern der Laufbahnen für die Wälzkörper, den Scheitellinien, im Boden der Gelenkkreuzbüchse und der Stirnseite des Zapfens ist erfindungsgemäß vorzugsweise ein Maß von ≥ 0,5 mm vorgesehen.

Diese Maßnahme begünstigt die gewünschte spielfreie Anordnung des Gelenkkreuzes, zur Erzielung eines geräuschoptimierten, schwingungsfreien Kreuzgelenks. Die konstruktive Ausgestaltung des Axiallagers in Verbindung mit einer entsprechenden Vorspannung erfolgt so, dass sich ein toleranzbedingtes und / oder einbaubedingtes Radialspiel nicht auswirkt, bzw. kompensiert werden kann. Im Betriebszustand, werden bei einer anschwellenden Momenteneinleitung in das Kreuzgelenk die sich einstellenden Kräfte zunächst von dem Axiallager in den Boden der Gelenkkreuzbüchse eingeleitet. Bei einem Drehmomentanstieg in das Kreuzgelenk stützen sich die Zapfen des Gelenkkreuzes über das Radiallager, den Nadelkranz ab, und verhindern dadurch vorteilhaft eine Überlastung des Axiallagers.

Das erfindungsgemäße Konzept zur Vermeidung eines Axialspiels innerhalb des Kreuzgelenks mittels eines Axiallagers erfordert weder einen erhöhten Fertigungsaufwand noch eine aufwändige Montage. Andererseits bewirkt die erfindungsgemäße Maßnahme neben einem optimalen axialen Spielausgleich, eine wirksame Zentrierung, eine reduzierte Geräuschentwicklung sowie ein verringertes Beugemoment des Kreuzgelenks.

Weitere vorteilhafte Ausgestaltungen der Erfindung sind Gegenstand der abhängigen Ansprüche.

Das Axiallager gemäß der Erfindung umfasst vorteilhaft eine vollkugelige Anordnung von Wälzkörpern. Alternativ dazu bietet es sich an, ein Axiallager einzusetzen, bei dem die Wälzkörper in einem separaten Käfig geführt sind.

Die zueinander radial versetzten Scheitelpunkte der Laufbahnen für die Wälzkörper stellt ein wesentliches Merkmal der Erfindung dar, zur Erzielung einer optimalen Zentrierung des Zapfens. Damit stellt sich ein schräg verlaufender Linienkontakt der Wälzkörper zwischen den versetzt angeordneten Laufbahnen ein, der einen Druckwinkel von ≥ 45° zur Längsachse des Kreuzgelenk-Zapfens einstellt.

Alternativ zu einer gezielten Zentrierung des Zapfens gegenüber dem Boden der Gelenkkreuzbüchse schließt die Erfindung ein Axiallager ein, bei dem die Wälzkörper nur einseitig in einer Laufbahn geführt sind. Bei diesem Aufbau werden die Wälzkörper bevorzugt in einer stirnseitigen Laufbahn des Zapfens geführt und stützen sich andererseits an einer planen, ebenen Fläche des Bodens der Gelenkkreuzbüchse ab. Diese Maßnahme gewährleistet ohne eine Zentrierung des Zapfens ein reduziertes Beugemoment des Kreuzgelenks. Durch eine entsprechend tiefe, in die Stirnseite des Zapfens eingebrachte Laufbahn, die beispielsweise den Durchmesser des Wälzkörpers übertrifft, in Verbindung mit dem eben ausgeführten Boden der Gelenkkreuzbüchse, stellt sich vorteilhaft ein verringerter axialer Abstand zwischen der Stirnseite des Zapfens und dem Boden der Gelenkkreuzbüchse ein, wodurch ein bauraumoptimiertes Kreuzgelenk realisierbar ist.

Die Erfindung schließt weiterhin eine Gestaltung der Gelenkkreuzbüchse ein, die unterschiedliche Wandstärken aufweist. Dazu bietet es sich an, die Wandstärke "s₁" des profilierten, eine Laufbahn für die Wälzkörper aufweisenden Bodens der Gelenkkreuzbüchse kleiner auszuführen als die Wandstärke "s₂" des zylindrischen Abschnitts der Gelenkkreuzbüchse. Diese Maßnahme ermöglicht ein vereinfachtes, spanloses Einformen der Laufbahn in den Boden. Aufgrund der Laufbahnkontur stellt sich eine Versteifung des Bodens ein, so dass dieser selbst bei einer verringerten Wandstärke eine ausreichende Steifigkeit bzw. Festigkeit aufweist.

Ein weiteres Gestaltungsmerkmal der Erfindung bezieht sich auf ein axiales Überstandsmaß zwischen der Scheitellinie der Wälzkörperlaufbahn und dem ebenen Abschnitt von dem Boden der Gelenkkreuzbüchse. Als Überstandsmaß ist dabei vorzugsweise ein Maß von ≤ 0,8 mm vorgesehen.

Das Kreuzgelenk gemäß der Erfindung ist bevorzugt in einer für eine Fahrzeuglenkung bestimmte Gelenkwelle eingesetzt. Der wirksame Spielausgleich einerseits und das vorteilhaft reduzierte Beugemoment andererseits führt zu einer direkten, verzögerungsfreien, den Lenkkomfort verbessernden Lenkung und vermeidet damit ein nachteiliges schwammiges Lenkgefühl.

Für das erfindungsgemäße Kreuzgelenk ist weiterhin vorgesehen, die Montage der Gelenkkreuzbüchsen mittels einer Vorrichtung durchzuführen, bei der jeweils zwei Gelenkkreuzbüchsen in gegenüberliegende Bohrungen einer Gelenkgabel eingepresst werden. Synchron dazu erfolgt eine definierte Verformung von dem Boden der Gelenkkreuzbüchse, zur Ausbildung der Laufbahn für die Wälzkörper des Axiallagers. Mittels der Vorrichtung werden abschließend Prägenasen in die Bohrungen der Gelenkgabel eingeformt, mit denen eine wirksame Lagefixierung der jeweiligen Gelenkkreuzbüchse erzielbar ist. Während des Einpressvorgangs und der gleichzeitigen Bodenverformung der Gelenkkreuzbüchse wird die Verformung bzw. die Einbaulage über eine als Messtaster ausgebildete Messeinrichtung überwacht.

### Kurze Beschreibung der Zeichnungen

Ausführungsbeispiele der Erfindung sind in den Zeichnungen dargestellt, die nachfolgend beschrieben werden.

Es zeigen:
- Figur 1: ein Kreuzgelenk, bei dem jedem Zapfen eine Gelenkkreuzbüchse mit integriertem Axiallager zugeordnet ist;
- Figur 2: in einer vergrößerten Darstellung ein Zapfen des Kreuzgelenks, in Verbindung mit einer im Schnitt dargestellten erfindungsgemäßen Gelenkkreuzbüchse;
- Figur 3: eine Vorrichtung, mit der die Gelenkkreuzbüchsen in Bohrungen einer Gelenkgabel eingepresst werden;
- Figur 4: in einer vergrößerten Abbildung einen Ausschnitt der Vorrichtung gemäß Figur 3, die das Anformen einer Prägenase verdeutlicht.

### Detaillierte Beschreibung der Zeichnungen

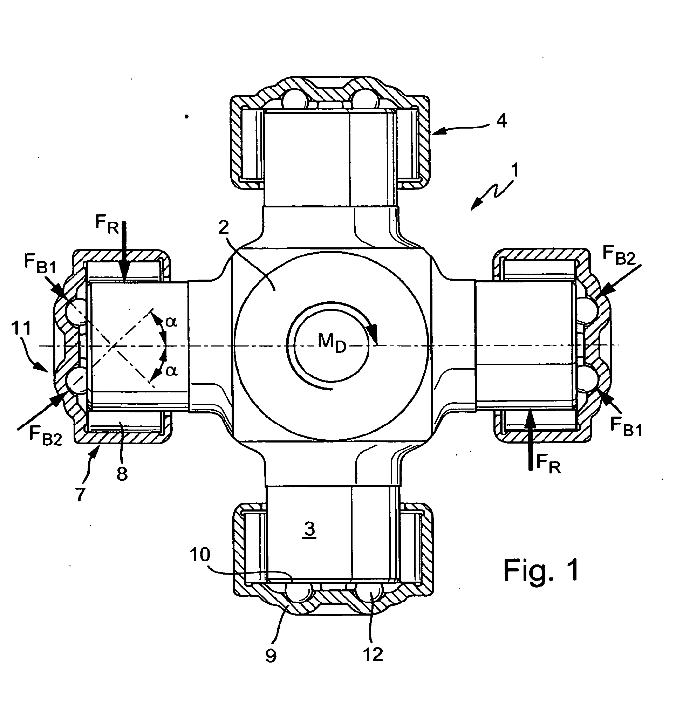

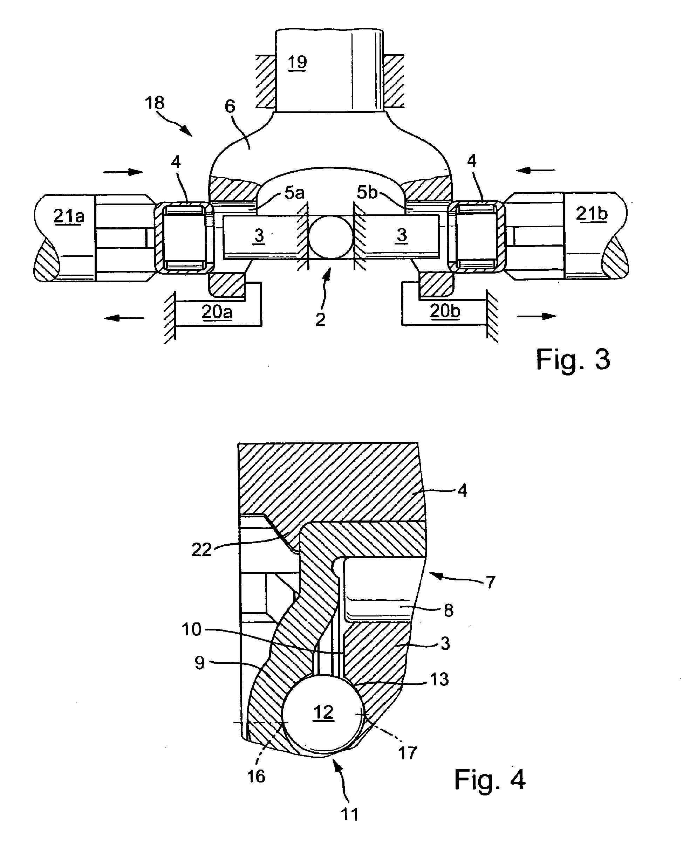

Das in Figur 1 abgebildete Kreuzgelenk 1 umfasst ein Gelenkkreuz 2 mit vier jeweils um 90° zueinander versetzt angeordneten Zapfen 3. Jedem Zapfen 3 ist eine Gelenkkreuzbüchse 4 zugeordnet, die ein topfartig geformtes, spanlos aus Stahlblech hergestelltes Bauteil darstellt, das jeweils den Zapfen 3 endseitig umschließt. Wie in Figur 3 dargestellt, sind im Einbauzustand jeweils zwei gegenüberliegende Gelenkkreuzbüchsen 4 in Bohrungen 5a, 5b einer Gelenkgabel 6 eingepresst. Eine Stell- bzw. Schwenkbewegung des Gelenkkreuzes 2 gegenüber den ortsfest in der Gelenkgabel 6 eingepressten Gelenkkreuzbüchsen 4 ermöglicht ein Radiallager 7, das zylindrische, einen Nadelkranz 8 bildende Wälzkörper umfasst. Dabei ist der Einbauraum für den Nadelkranz 8 innenseitig von einer Mantelfläche des Zapfens 3 und außenseitig von einer Innenkontur der Gelenkkreuzbüchse 4 begrenzt.

Zwischen einem Boden 9 der Gelenkkreuzbüchse 4 und einer Stirnfläche 10 des Zapfens 3 ist ein als Schrägkugellager ausgebildetes Axiallager 11 eingesetzt. Die Wälzkörper 12 des Axiallagers 11 sind dabei an der Stirnfläche 11 und dem Boden 9 der Gelenkkreuzbüchse 4 geführt. In der Einbaulage ist das Gelenkkreuz 2 in axialer Richtung aufgrund des als Schrägkugellager ausgebildeten Axiallagers 11 spielfrei zentriert.

Im Betriebszustand, bei dem beispielsweise ein im Uhrzeigersinn wirkendes Drehmoment "M_{D}" in das Kreuzgelenk 1 eingeleitet wird, werden die sich einstellenden Kräfte "F_{B1}" und "F_{B2}", jeweils unter einem Druckwinkel "α" zunächst über das Axiallager 11 abgestützt. Falls ein Spiel im Radiallager 7 vorhanden ist, wird dieses aufgrund des vorgespannten, das Gelenkkreuz 2 zentrierenden Axiallagers 11 kompensiert. Bei steigendem Drehmoment "M_{D}" sind die Zapfen 3 über das Radiallager 7 abgestützt, so dass eine Überlastung des Axiallagers 11 unterbleibt.

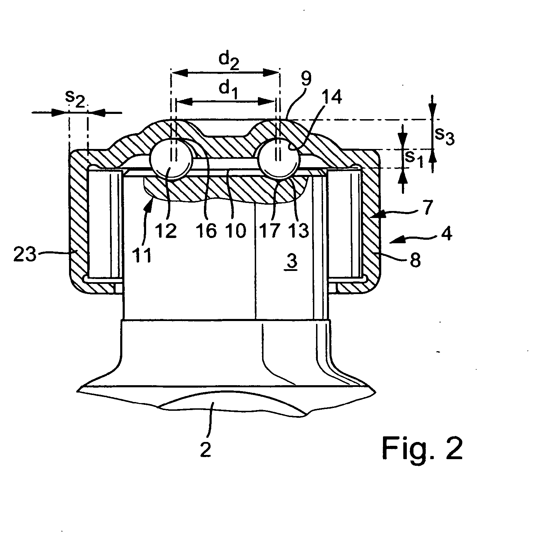

Weitere Details des Axiallagers 11 zeigt die Figur 2. Die Führung der Wälzkörper 12 des Axiallagers 11 erfolgt über Laufbahnen 13, 14, die in einer Stirnseite 15 des Zapfens 3 sowie in dem Boden 9 der Gelenkkreuzbüchse 4 eingebracht sind. Zur Darstellung eines als Schrägkugellager ausgebildeten Axiallagers 11 weist die Laufbahn 14 im Boden 9 der Gelenkkreuzbüchse 4 einen gegenüber dem Radius des Wälzkörpers 12 deutlich vergrößertes Querschnittsprofil auf. Die Laufbahn 14 bildet eine Scheitellinie 16, deren Durchmesser durch "d₁" gekennzeichnet ist. Die weitestgehend dem Radius der Wälzkörper 12 angepasste weitere Laufbahn 13 in der Stirnseite 15 des Zapfens 3 bildet die Scheitellinie 17, deren Durchmesser durch die "d₂" gekennzeichnet ist. Aufgrund der Durchmesserunterschiede der Scheitellinien 16, 17 stellt sich ein gewollter Kantentrag der Wälzkörper 2 in der Laufbahn 14 ein, wodurch sich bei einer Axialbelastung des Zapfens 3 in Richtung des Bodens 9 der Gelenkkreuzbüchse 4, selbsttätig eine Zentrierung des Gelenkkreuzes 2 über das Axiallager 11 einstellt. Damit verbunden lässt sich gleichzeitig vereinfacht ein in axialer Richtung spielfreies, zentriertes Kreuzgelenk 1 realisieren. Der Versatz der Scheitellinien 16, 17 nimmt gleichzeitig Einfluss auf den Druckwinkel "α" des Axiallagers 11, verdeutlicht durch die Pfeilrichtung der Kräfte "F_{B1}," und "F_{B2}" gemäß Figur 1. Die spanlos, bevorzugt durch ein Tiefziehverfahren hergestellte Gelenkkreuzbüchse 4 kann unterschiedliche Wandstärken aufweisen. Beispielsweise bietet es sich an, die Wandstärke "s₁" im Boden 9 kleiner auszubilden als die Wandstärke "s₂' in einem zylindrischen Abschnitt 23 der Gelenkkreuzbüchse 4. Das Maß "s₃" bestimmt ein sich zwischen dem Boden 9 und der Scheitellinie 16 der Gelenkreuzbüchse 4 einstellendes Überstandsmaß.

Die Figur 3 zeigt schematisch den Aufbau einer Vorrichtung 18, mit der gleichzeitig zwei Gelenkkreuzbüchsen 4 in Bohrungen 5a, 5b der Gelenkgabel 6 einer Gelenkwelle 19 eingepresst werden. Dazu wird die Gelenkgabel 6 mittels spreizbaren Haltebacken 20a, 20b lagefixiert, bevor Stempel 21 a, 21 b gleichzeitig jeweils eine Gelenkkreuzbüchse 4 in die Bohrung 5a, 5b der Gelenkgabel 6 einpressen. Dazu ist das Gelenkkreuz 2 zuvor in eine exakte Lageposition gegenüber der Gelenkgabel 6 gebracht, so dass während des Einpressvorgangs die Gelenkkreuzbüchsen 4 sich auf die Zapfen 3 des Gelenkkreuzes 2 axial aufschieben. Zuvor wurde die Gelenkkreuzbüchse 4 sowohl mit dem Radiallager 7 als auch das Axiallager 11 bestückt. Der von einer Messeinrichtung überwachte Einpressvorgang wird nach Erreichen einer definierten Endposition beendet, bei der sich eine gewünschte Vorspannung des Axiallagers 11 innerhalb der Gelenkkreuzbüchsen 4 einstellt.

Wie in der Figur 4 dargestellt, werden nach dem Einpressvorgang der Gelenkkreuzbüchsen 4, anschließend mit Hilfe der Stempel 21 a, 21 b partiell Prägenasen 22 im Bereich der Bohrung 5a, 5b der Gelenkgabel 6 angeformt. Die Prägenasen 22 gewährleisten eine lagefixierte Einbaulage der Gelenkkreuzbüchsen 4 in der Gelenkgabel 6.

### Bezugszahlen

- 1: Kreuzgelenk
- 2: Gelenkkreuz
- 3: Zapfen
- 4: Gelenkkreuzbüchse
- 5a: Bohrung
- 5b: Bohrung
- 6: Gelenkgabel
- 7: Radiallager
- 8: Nadelkranz
- 9: Boden
- 10: Stirnfläche
- 11: Axiallager
- 12: Wälzkörper
- 13: Laufbahn
- 14: Laufbahn
- 15: Stirnseite
- 16: Scheitellinie
- 17: Scheitellinie
- 18: Vorrichtung
- 19: Gelenkwelle
- 20a: Haltebacke
- 20b: Haltebacke
- 21 a: Stempel
- 21 b: Stempel
- 22: Prägenase
- 23: Abschnitt

## Patentansprüche

1. Kreuzgelenk, das ein Gelenkkreuz (2) mit um 90° zueinander versetzte Zapfen (3) umfasst, die jeweils über eine Gelenkkreuzbüchse (4) in Verbindung mit einem Nadelkranz (8) paarweise in eine von zwei Gelenkgabeln (6) eingesetzt sind, wobei zwischen einem Boden (9) der Gelenkkreuzbüchse (4) und einer Stirnfläche (10) des Zapfens (3) ein zumindest zwei Wälzkörper (12) umfassendes Axiallager (11) angeordnet ist, der Zapfen (3) über das Axiallager (11) an dem Boden (9) der Gelenkkreuzbüchse (4) abgestützt, axial geführt und zentriert ist, und wobei die Wälzkörper (12) des Axiallagers (11) in Laufbahnen (13, 14) geführt sind, die in einer Stirnfläche (10) des Zapfens (3) und dem Boden (9) der Gelenkkreuzbüchse (4) eingebracht sind, **dadurch gekennzeichnet, dass** das Axiallager als ein Schrägkugellager ausgebildet ist, in dem die Laufbahnen (13, 14) des Zapfens (3) und des Bodens (9) für die Wälzkörper (12) des Axiallagers (11) zueinander radial versetzte Scheitellinien (16, 17) aufweisen.

2. Kreuzgelenk nach Anspruch 1, bei dem die Scheitellinien (16, 17) der Laufbahnen (13, 14) unterschiedliche Durchmesser "d₁" und "d₂" aufweisen, wobei ein Differenzmaß ≥ 0,5 mm beiträgt.

3. Kreuzgelenk nach Anspruch 1, dessen Axiallager (11) eine vollkugelige Anordnung der Wälzkörper (12) einschließt.

4. Kreuzgelenk nach Anspruch 1, bei dem die Wälzkörper (12) des Axiallagers (11) in einem Käfig geführt sind.

5. Kreuzgelenk nach Anspruch 1, dessen Axiallager (11) Wälzkörper (12) einschließt, die einerseits in der dem Boden (9) der Gelenkkreuzbüchse (4) zugeordneten Laufbahn (14) geführt sind und andererseits an der ebenen Stirnfläche (10) des Zapfens (3) abgestützt sind.

6. Kreuzgelenk nach Anspruch 1, wobei der Boden (9) der Gelenkkreuzbüchse (4) eine Wandstärke "s₁" aufweist, die sich von einer Wandstärke "s₁" eines zylindrischen Abschnitts (23) der Gelenkkreuzbüchse (4) unterscheidet.

7. Kreuzgelenk nach Anspruch 1, bei dem die Gelenkkreuzbüchse (4) ein Überstandsmaß "s₃' von ≤ 0,8 mm zwischen der von der Laufbahn (14) bestimmten Scheitellinie (16) und dem Boden (9) aufweist.

8. Kreuzgelenk nach Anspruch 1, das für eine in einer Fahrzeuglenkung eingesetzten Gelenkwelle bestimmt ist.

## Claims

1. Universal joint, which comprises a spider (2) with journals (3) which are offset at 90º with respect to one another and which are inserted in each case via a universal joint socket (4), in conjunction with the a ring (8), into one of two joint forks (6) in pairs, an axial bearing (11) comprising at least two rolling bodies (12) being arranged between a bottom (9) of the universal joint socket (4) and an end face (10) of the journal (3), the journal (3) is supported, guided axially and centered on the bottom (9) of the universal joint socket (4) via an axial bearing (11), and the rolling bodies (12) of the axial bearing (11) being guided in raceways (13, 14) which are introduced in one end face (10) of the journal (3) and the bottom (9) of the universal joint socket (4), **characterized in that** the axial bearing is designed as an angular ball bearing, in which the raceways (13, 14) of the journal (3) and of the bottom (9) for the rolling bodies (12) of the axial bearing (11) have apex lines (16, 17) offset radially with respect to one another.

2. Universal joint according to Claim 1, in which the apex lines (16, 17) of the raceways (13, 14) have different diameters "d₁" and "d₂", a differential dimension amounting to ≥ 0.5 mm.

3. Universal joint according to Claim 1, the axial bearing (11) of which includes a fully spherical arrangement of the rolling bodies (12).

4. Universal joint according to Claim 1, in which the rolling bodies (12) of the axial bearing (11) are guided in a cage.

5. Universal joint according to Claim 1, the axial bearing (11) of which includes rolling bodies (12) which, on the one hand, are guided in the raceway (14) assigned to the bottom (9) of the universal joint socket (4) and, on the other hand, are supported on the planar end face (10) of the journal (3).

6. Universal joint according to Claim 1, the bottom (9) of the universal joint socket (4) having a wall thickness "s₁" which differs from a wall thickness "s₂" of a cylindrical portion (23) of the universal joint socket (4).

7. Universal joint according to Claim 1, in which the universal joint socket (4) has a projecting dimension "s₃" of ≤ 0.8 mm between the apex line (16) defined by the raceway (14) and the bottom (9).

8. Universal joint according to Claim 1, which is intended for a cardan shaft used in vehicle steering.

## Revendications

1. Joint à croisillons, qui comprend un croisillon (2) avec des tourillons (3) décalés de 90° les uns par rapport aux autres, qui sont insérés à chaque fois par le biais d'un manchon de croisillon (4) en liaison avec une couronne à aiguilles (8) par paires dans une de deux fourchettes d'articulation (6), un palier axial (11) comprenant au moins deux corps de roulement (12) étant disposé entre un fond (9) du manchon de croisillon (4) et une surface frontale (10) du tourillon (3), le tourillon (3) étant supporté, guidé axialement et centré par le biais du palier axial (11) sur le fond (9) du manchon de croisillon (4), et les corps de roulement (12) du palier axial (11) étant guidés dans des chemins de roulement (13, 14) qui sont pratiqués dans une surface frontale (10) du tourillon (3) et du fond (9) du manchon de croisillon (4), **caractérisé en ce que** le palier axial est réalisé sous forme de roulement à billes à contact oblique, dans lequel les chemins de roulement (13, 14) du tourillon (3) et du fond (9) pour les corps de roulement (12) du palier axial (11) présentent des lignes de sommet (16, 17) décalées radialement les unes par rapport aux autres.

2. Joint à croisillons selon la revendication 1, dans lequel les lignes de sommet (16, 17) des chemins de roulement (13, 14) présentent des diamètres différents "d₁" et "d₂", une mesure de différence étant ≥ 0,5 mm.

3. Joint à croisillons selon la revendication 1, dont le palier axial (11) forme un agencement complètement sphérique des corps de roulement (12).

4. Joint à croisillons selon la revendication 1, dans lequel les corps de roulement (12) du palier axial (11) sont guidés dans une cage.

5. Joint à croisillons selon la revendication 1, dont le palier axial (11) comprend des corps de roulement (12) qui sont guidés d'une part dans le chemin de roulement (14) associé au fond (9) du manchon de croisillon (4) et d'autre part qui sont supportés sur la surface frontale plane (10) du tourillon (3).

6. Joint à croisillons selon la revendication 1, dans lequel le fond (9) du manchon de croisillon (4) présente une épaisseur de paroi "s₁" qui se distingue d'une épaisseur de paroi "s₂" d'une portion cylindrique (23) du manchon de croisillon (4).

7. Joint à croisillons selon la revendication 1, dans lequel le manchon de croisillon (4) présente une dimension de dépassement "s₃" ≤ 0,8 mm entre la ligne de sommet (16) définie par le chemin de roulement (14) et le fond (9).

8. Joint à croisillons selon la revendication 1, qui est prévu pour un arbre articulé utilisé dans une direction d'automobile.
